# EUROPÄISCHE PATENTSCHRIFT

(11) **EP 3 657 285 B1**
(45) Veröffentlichungstag und Bekanntmachung des Hinweises auf die Patenterteilung: **10.05.2023**
(21) Anmeldenummer: 18208248.7
(22) Anmeldetag: 26.11.2018
(51) Int. Cl.: G05B 19/418

(54) **EINBINDUNG VON TECHNISCHEN MODULEN IN EINE ÜBERGEORDNETE STEUERUNGSEBENE**
INTEGRATION OF TECHNICAL MODULES IN A HIERARCHICALLY HIGHER CONTROL LEVEL
INCLUSION DES MODULES TECHNIQUES DANS UN NIVEAU DE CONTROLE PLUS HAUTE

(43) Veröffentlichungstag der Anmeldung: 27.05.2020
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- EP-A1- 3 246 773
- GB-A- 2 398 659
- Felix Seibl: "Modulbasierte Produktion in der Prozessindustrie - Auswirkungen auf die Automation im Umfeld von Industrie 4.0 Empfehlungen des AK Modulare Automation zur NE 148 der Namur Fachverband Automation", , 28. Februar 2015 (2015-02-28), XP055416151, Gefunden im Internet: URL:https://www.zvei.org/fileadmin/user_up load/Presse_und_Medien/Publikationen/2015/ februar/White_Paper__Modulbasierte_Produkt ion_in_der_Prozessindustrie_-_Auswirkungen _auf_die_Automation_im_Umfeld_von_Industri e_4.0/ZVEI-White-Paper-Modulare-Automation .pdf [gefunden am 2017-10-16]
- Wago: "DIMA - Dezentrale Intelligenz für modulare Anlagen", , 14. Dezember 2015 (2015-12-14), Seiten 1-8, XP55355896, Gefunden im Internet: URL:http://www.dima-process.com/wp-content /uploads/2015/12/WHITEPAPER_Technische_Loe sung_fuer_die_Automatisierung_modularer_An lagen.pdf [gefunden am 2017-03-17]

## Beschreibung

Die Erfindung betrifft ein Verfahren zur Integration eines technischen Moduls in ein, als eine übergeordnete Steuerungsebene agierendes Engineering-System einer technischen Anlage nach Anspruch 1. Außerdem betrifft die Erfindung ein technisches System nach Anspruch 3.

Vor allem in der Pharmaindustrie und Spezialchemie bestehen hohe Anforderungen an Betreiber technischer Anlagen schnell auf geänderte Marktanforderungen reagieren zu können. Modulare Anlagen ermöglichen es den Anlagenbetreibern, die sogenannte "Time-to-Market" erheblich zu verkürzen und durch einen aufwandsarmen Umbau der Anlage schnell auf geänderte Marktbedingungen reagieren zu können. Die Anlagenbetreiber können sich hierzu einen Pool an modularen Einheiten (z.B. Prozesseinheiten) aufbauen, mithilfe dessen sie eine konkrete Anlage mittels der sogenannten Orchestrierung zusammenstellen können. Soll die Anlage umgebaut werden, so werden einzelne Module bzw. Package Units entnommen und durch andere, zum Beispiel leistungsfähigere Module bzw. Package Units ersetzt.

Unter einem Modul bzw. einer Package Unit wird im vorliegenden Kontext ein Teil einer technischen Anlage verstanden, der in einem zentralen Engineering der technischen Anlage als eine abgeschlossene Einheit integriert werden kann. Module sind umfangreicher als einzelne Messstellen oder technische Einrichtungen. Unter einem Modul kann auch eine Teilanlage der technischen Anlage mit einer kompletten verfahrenstechnischen Struktur gefasst werden, die mehrere technische Einrichtungen (z.B. Tanks) umfasst, die wiederum mehrere Messstellen (z.B. Ventile, Monitore, Regler, Motoren...) beinhalten.

In der Druckschrift WO 2016/074730 A1 wird eine Methode beschrieben, wie eine modulare technische Anlage mittels Selbstbeschreibungsinformationen der Module erstellt werden kann. Diese Methode basiert auf online verfügbaren Selbstbeschreibungsinformationen der einzelnen Module.

Wird ein Modul bzw. eine Package Unit in das Engineering importiert, so müssen anschließend Funktionsrechte für verschiedene, darin enthaltene technische Einrichtungen und Messstellen definiert bzw. vergeben werden. Dabei fehlt hinsichtlich eines Sicherheitsmanagements jegliche Referenz. Somit gestaltet sich der Vorgang zur Definition bzw. Vergabe der Funktionsrechte heute als sehr aufwändig.

In der Regel werden die Funktionsrechte "auf die Schnelle" und im Hinblick auf Security nicht optimal (was insbesondere "nicht restriktiv genug" bedeutet) vergeben. Diese stellt aus einer informationstechnischen Sicherheitssicht ein großes Risiko dar. So können für dasselbe Modul bzw. dieselbe Package Unit - wenn diese nach und nach in verschiedenen verfahrenstechnischen Projekten eingebunden werden - jedes Mal andere Funktionsrechte für deren Verwendung zu Grunde liegen. Das ist insbesondere dann kritisch, wenn das Modul / die Package Unit über kritische Anlagenteile verfügt, die nur von Spezialisten bedient, beobachtet oder angepasst werden dürfen.

In der EP 3 246 773 A1 ist ein Verfahren zum Engineering einer verfahrens- oder prozesstechnischen Anlage offenbart.

Die GB 2 398 659 A zeigt ein Engineering-System für eine Prozessanlage.

Der Erfindung liegt die Aufgabe zugrunde, ein einfaches und dabei sichereres Verfahren zur Integration von technischen Modulen in ein Engineering einer technischen Anlage anzugeben.

Diese Aufgabe wird gelöst durch ein Verfahren zur Integration eines technischen Moduls in ein, als eine übergeordnete Steuerungsebene agierendes Engineering-System einer technischen Anlage, wobei das technische Modul wenigstens eine technische Funktion umfasst, nach Anspruch 1. Außerdem wird die Aufgabe gelöst durch ein technisches System nach Anspruch 3.

Das erfindungsgemäße Verfahren ist dadurch gekennzeichnet, dass in dem technischen Modul vor der Integration in die übergeordnete Steuerungsebene Funktionsrechte betreffend die wenigstens eine technische Funktion hinterlegt werden, wobei die Funktionsrechte dauerhaft zugewiesen sind, und wobei vor der Hinterlegung der Funktionsrechte im Rahmen einer sicherheitstechnischen Sicherheitsprüfung zunächst ermittelt wird, welchen minimalen Umfang die zu hinterlegenden Funktionsrechte in Abhängigkeit von vordefinierten Benutzerrollen in der technischen Anlage aufweisen müssen, wobei ein Umfang der in dem technischen Modul zu hinterlegenden Funktionsrechte anhand der Ergebnisse der informationstechnischen Sicherheitsprüfung festgelegt wird.

Unter einem technischen Modul wird eine abgeschlossene technische Einheit verstanden, die in eine übergeordnete Steuerungsebene integrierbar ist. Ein solches technisches Modul kann zum Beispiel ein Zusammenschluss mehrerer Messstellen oder ein größerer Anlagenteil einer industriellen Anlage sein. Das technische Modul muss aber nicht dem Feld der Industrieanlagen entstammen, sondern kann beispielsweise auch ein Motormodul eines Automobils, eines Schiffs oder dergleichen sein.

Die übergeordnete Steuerungsebene kann ein beliebiges System sein, insbesondere ein Engineering-System eines Prozessleitsystems, das zu einer steuerungs-/automatisierungstechnischen Verknüpfung und Koordinierung einzelner technischer Module ausgelegt ist.

Der Begriff "technische Funktion" ist breit auszulegen. Es kann sich dabei beispielsweise um das Öffnen oder Schließen eines Ventils, das Starten oder Stoppen eines Motors, oder um das Befüllen oder Entleeren eines Tanks handeln.

Die für die einzelnen technischen Funktionen des Moduls hinterlegten Funktionsrechte müssen dabei nicht notwendigerweise identisch sein. Ein Modul kann beispielsweise einen Tank, einen Separator und eine Heizvorrichtung umfassen. Um auf die technischen Funktionen des Heizers zugreifen zu können, können beispielsweise einfache Operator-Funktionsrechte vergeben werden. "Zugreifen" kann dabei beispielsweise "Bedienen" und "Beobachten" bedeuten. Um auf die technischen Funktionen der Heizvorrichtung zugreifen zu können, können hingegen höhere Funktionsrechte vergeben werden, die beispielsweise auch nur ein "Beobachten" der Heizvorrichtung erlauben.

Wird das Modul in die übergeordnete Steuerebene integriert, so sind die unterschiedlichen technischen Funktionen bzw. technologischen Bereiche des Moduls bereits mit (dafür notwendigen bzw. sinnvollen) Funktionsrechten vorbelegt. Dadurch entfällt der Aufwand für die Definition bzw. die Vergabe der Funktionsrechte bei einer Koordinierung der Module in der übergeordneten Steuerebene. Zudem kann effektiv auf einfache Art und Weise verhindert werden, dass für dasselbe Modul bzw. dieselbe Package Unit andere Funktionsrechte für deren Verwendung zu Grunde liegen können, wenn das Modul in verschiedenen, beispielsweise verfahrenstechnischen Projekten eingebunden wird. Damit kann bereits im Vorfeld informationstechnischen Sicherheitsbedenken bei Verwendung von kritischen Anlagenteilen als Module entgegengetreten werden. Falls die Benutzerrolle eines Operators spezielle technische Funktionen eines Moduls nutzen will, so können der Benutzerrolle die hierfür erforderlichen Rechte in der übergeordneten Steuerungsebene erteilt werden.

Die im Vorfeld zugewiesene Rechteeinstufung der einzelnen technischen Funktionen eines Moduls ist aber dauerhaft. Eine Herabstufung der für die einzelnen technischen Funktionen in der übergeordneten Steuerungsebene ist nicht möglich, was einen bedeutenden Sicherheitsgewinn mit sich bringt.

Vor der Hinterlegung der Funktionsrechte wird im Rahmen einer Sicherheitsprüfung zunächst ermittelt, welchen minimalen Umfang die zu hinterlegenden Funktionsrechte in Abhängigkeit von vordefinierten Benutzerrollen in der technischen Anlage aufweisen müssen, wobei ein Umfang der in dem technischen Modul zu hinterlegenden Funktionsrechte anhand der Ergebnisse der informationstechnischen Sicherheitsprüfung (IT-Sicherheits-prüfung) festgelegt wird. Eine Benutzerrolle stellt dabei beispielsweise ein Operator oder ein Administrator dar. Im Rahmen einer derartigen Analyse wird, ausgehend von der Struktur des Moduls, untersucht, welche minimalen Funktionsrechte für die jeweiligen existierenden Benutzerrollen notwendig sind. Diese minimalen Funktionsrechte werden anschließend den einzelnen Benutzerrollen zugeordnet und in dem Modul hinterlegt. Durch die bevorzugte Weiterbildung des Verfahrens kann sichergestellt werden, dass minimale Funktionsrechte vergeben werden, was sich, unter einem Sicherheitsaspekt gesehen, vorteilhaft gestaltet.

Im Rahmen einer vorteilhaften Weiterbildung der Erfindung wird nach der Hinterlegung der Funktionsrechte in dem technischen Modul eine Überprüfung dahingehend vorgenommen, ob nach der Festlegung des Umfangs der Funktionsrechte ein störungsfreier Betrieb der technischen Anlage möglich ist. Dadurch kann sichergestellt werden, dass die erfolgte Definition bzw. die Zuordnung der Funktionsrechten zu den existierenden Benutzerrollen unter jeglichen Bedingungen einen störungsfreien Betrieb der technischen Anlage ermöglicht. Dabei kann insbesondere geprüft werden, ob alle technischen Funktionen des jeweiligen technischen Moduls auch (entsprechende Berechtigungen vorausgesetzt) von der übergeordneten Steuerungsebene benutzbar sind.

Die Aufgabe wird zudem gelöst durch ein technisches System mit einem technischen Modul einer technischen Anlage, das wenigstens eine technische Funktion umfasst und das zur Integration in eine übergeordnete Steuerungsebene der technischen Anlage ausgebildet ist. Das technische Modul zeichnet sich erfindungsgemäß dadurch aus, dass in dem technischen Modul Funktionsrechte betreffend die wenigstens eine technische Funktion hinterlegt sind, wobei die Funktionsrechte dauerhaft zugewiesen sind, und wobei das technische System dazu geeignet ist, vor der Hinterlegung der Funktionsrechte im Rahmen einer sicherheitstechnischen Sicherheitsprüfung zunächst zu ermitteln, welchen minimalen Umfang die zu hinterlegenden Funktionsrechte in Abhängigkeit von vordefinierten Benutzerrollen in der technischen Anlage dauerhaft aufweisen müssen, und wobei das technische System dazu geeignet ist, einen Umfang der in dem technischen Modul zu hinterlegenden Funktionsrechte anhand der Ergebnisse der informationstechnischen Sicherheitsprüfung festzulegen.

Bevorzugt sind wenigstens die hinterlegten Funktionsrechte mittels einer geeigneten Authentifizierungsmethode gegenüber der übergeordneten Steuerungsebene der technischen Anlage als vertrauenswürdig gekennzeichnet. Besonders bevorzugt ist das gesamte technische Modul als vertrauenswürdig gegenüber der übergeordneten Steuerungsebene gekennzeichnet.

Die einzelnen Funktionsrechte und/oder das gesamte technische Modul sind vorteilhafterweise durch geeignete Mechanismen zum Integritätsschutz und zur Authentifizierung vor unberechtigten Manipulationen geschützt. Ein Hersteller des technischen Moduls kann hierzu beispielsweise einzelne technische Funktionen und/oder das gesamte technische Modul mit (jeweils) einem sicher hinterlegten privaten Schlüssel (engl. "private key") und einem dazugehörigen (Hersteller-)Zertifikat versehen. Eine Manipulation von Funktionsrechten kann dabei bei einer Validierung des Zertifikats gegenüber der übergeordneten Steuerungsebene der technischen Anlage erkannt werden. Hierdurch kann ein Schutzniveau des technischen Moduls im Sinne einer IT-Sicherheit in Bezug auf unberechtigte Zugriffe Dritter erhöht werden.

Obwohl die Erfindung im Detail durch die bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

In einem Ausführungsbeispiel ist ein technisches Modul Teil einer industriellen Anlage. Es umfasst folgende Informationen:
- Anlagenbilder: In einem standardisierten Format bereitgestellt sind diese für das Bedienen und Beobachten durch einen Operator Station Server zur Visualisierung in einem Operator Station Client vorgesehen;
- Schnittstelle: Eine Schnittstellenbeschreibung dient der Bedienung, Beobachtung und Automatisierung des technischen Moduls im Verbund mit anderen Anlagenteilen;
- Ausstattung: Eine Art technologische Hierarchie, zur strukturellen Beschreibung des technischen Moduls (z.B. Puffertank, Reaktor, Mischer etc.); die Anlagenbilder und Schnittstellen werden entsprechend auf die Ausstattung (engl. "Equipment") abgebildet; zum Beispiel wird ein Signal zum Steuern des Mischers einem Operator über ein Anlagenbild des Mischers angeboten.

Erfindungsgemäß ist das technische Modul mit dauerhaften Funktionsrechten betreffend die einzelnen technischen Funktionen des Moduls versehen. Dabei handelt es sich um die minimal benötigten Funktionsrechte zum Bedienen und Beobachten des technischen Moduls. Dabei wurde im Vorfeld eine informationstechnische Sicherheitsanalyse (IT-Sicher-heitsanalyse) durchgeführt, um die minimalen Funktionsrechte zu ermitteln. Ziel ist dabei, jedem Benutzer in der technischen Anlage die geringstmöglichen (d.h. einer möglichst geringen Bedienberechtigungsstufe zugeordneten) Funktionsrechte dauerhaft zu gewähren, die er zur Durchführung seiner Aufgaben im Rahmen der ihm zugeordneten Benutzerrolle benötigt. Während für den Mischer beispielsweise ein höheres Bedienrecht einer Stufe X benötigt wird, genügt für den Puffertank ein gewöhnliches Bedienrecht.

Wird das erfindungsgemäß ausgebildete technische Modul in einem zentralen, als übergeordnete Steuerungsebene agierenden Engineering-System der industriellen Anlage importiert (hierfür können proprietäre Austauschformate wie SIMATIC ML oder standardisierte Austauschformate wie MTP (Module Type Package) verwendet werden), so wird das Engineering-System um die "Equipments" und die Anlagenbilder des technischen Moduls erweitert. Dabei werden auch die für die jeweiligen technischen Funktionen des technischen Moduls notwendigen Funktionsrechte aus dem technischen Modul in das Engineering-System als übergeordnete Steuerungsebene importiert und dort hinterlegt. Werden nun von dem Engineering-System die technischen Funktionen mit Anwendern in bestimmten Benutzerrollen assoziiert, kann das Engineering-System prüfen, ob der vorgesehene Anwender in seiner Benutzerrolle überhaupt die geforderten Rechte aufweist, um eine Assoziation herzustellen. Wurde beispielsweise dem Anwender "X" in der Benutzerrolle "normal Operator" nicht das Recht "Bedienberechtigungsstufe 3" zugewiesen, kann er im Engineering-System nicht mit einer technischen Funktion "Mischer" assoziiert werden, welche eine entsprechende Funktionsstufe als Bedingung aufweist. Die Assoziierung wird dann entsprechend verweigert.

Vorteilhafterweise können nach der Integration eines technischen Moduls im zentralen Engineering-System passende Benutzerrollen abgeleitet werden, wenn vorhandene Benutzerrollen nicht über die entsprechenden Rechtesätze verfügen, um das technische Modul projektieren sowie bedienen und beobachten zu können. Das ist insbesondere dann hilfreich, wenn die industrielle Anlage bereits in Betrieb ist und eine Änderung von Benutzerrollen im Betrieb aufwändig wäre. Einem vorhandenen Anwender - z.B. "Y" - kann dann die entsprechende Benutzerrolle zugewiesen werden, so dass die Assoziation mit dem technischen Modul und/oder einzelnen technischen Funktionen des technischen Moduls möglich ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Integration eines technischen Moduls in ein, als eine übergeordnete Steuerungsebene agierendes Engineering-System eines Prozessleitsystems einer technischen Anlage, wobei das technische Modul wenigstens eine technische Funktion umfasst,
**dadurch gekennzeichnet, dass**
in dem technischen Modul vor der Integration in die übergeordnete Steuerungsebene Funktionsrechte betreffend die wenigstens eine technische Funktion hinterlegt werden, wobei die Funktionsrechte dauerhaft zugewiesen sind, und wobei vor der Hinterlegung der Funktionsrechte im Rahmen einer sicherheitstechnischen Sicherheitsprüfung zunächst ermittelt wird, welchen minimalen Umfang die zu hinterlegenden Funktionsrechte in Abhängigkeit von vordefinierten Benutzerrollen in der technischen Anlage aufweisen müssen, wobei ein Umfang der in dem technischen Modul zu hinterlegenden Funktionsrechte anhand der Ergebnisse der informationstechnischen Sicherheitsprüfung festgelegt wird.

2. Verfahren nach Anspruch 1, bei dem nach der Hinterlegung der Funktionsrechte in dem technischen Modul eine Überprüfung vorgenommen wird, ob nach der Festlegung des Umfangs der Funktionsrechte ein störungsfreier Betrieb der technischen Anlage möglich ist.

3. Technisches System mit einem technischen Modul einer technischen Anlage, das wenigstens eine technische Funktion umfasst und das zur Integration in ein Engineering-System eines Prozessleitsystems der technischen Anlage ausgebildet ist,
**dadurch gekennzeichnet, dass**
in dem technischen Modul Funktionsrechte betreffend die wenigstens eine technische Funktion hinterlegt sind, wobei die Funktionsrechte dauerhaft zugewiesen sind,
und wobei das technische System dazu geeignet ist, vor der Hinterlegung der Funktionsrechte im Rahmen einer sicherheitstechnischen Sicherheitsprüfung zunächst zu ermitteln, welchen minimalen Umfang die zu hinterlegenden Funktionsrechte in Abhängigkeit von vordefinierten Benutzerrollen in der technischen Anlage dauerhaft aufweisen müssen, und wobei das technische System dazu geeignet ist, einen Umfang der in dem technischen Modul zu hinterlegenden Funktionsrechte anhand der Ergebnisse der informationstechnischen Sicherheitsprüfung festzulegen.

4. Technisches System nach Anspruch 3, das dazu geeignet ist, wenigstens die hinterlegten Funktionsrechte mittels einer geeigneten Authentifizierungsmethode gegenüber dem Engineering-System des Prozessleitsystems der technischen Anlage als vertrauenswürdig zu kennzeichnen, bevorzugt das gesamte technische Modul.

## Claims

1. Method for integrating a technical module into an engineering system, operating as a higher-level control level, of a process control system of a technical installation, wherein the technical module comprises at least one technical function,
**characterised in that**
functional rights relating to the at least one technical function are stored in the technical module before integration into the higher-level control level, wherein the functional rights are permanently assigned, and wherein before storing functional rights within the scope of a safety check, it is firstly determined which minimal extent the functional rights to be stored have to have as a function of predefined user roles in the technical installation, wherein an extent of the functional rights to be stored in the technical module is fixed on the basis of the results of the information technology security check.

2. Method according to claim 1, in which after storing the functional rights in the technical module, a check is performed to determine whether a trouble-free operation of the technical installation is possible after defining the extent of the functional rights.

3. Technical system with a technical module of a technical installation, which comprises at least one technical function and which is embodied for integration into an engineering system of a process control system of the technical installation,
**characterised in that**
functional rights relating to the at least one technical function are stored in the technical module, wherein the functional rights are permanently assigned, and wherein before storing functional rights within the scope of a safety check, the technical system is suited firstly to determining which minimal extent the functional rights to be stored have to have as a function of predefined user roles in the technical installation, and wherein the technical system is suited to fixing an extent of the functional rights to be stored in the technical module on the basis of the results of the information technology security check.

4. Technical system according to claim 3, which is suited to identifying at least the stored functional rights as trusted compared with the engineering system of the process control system of the technical installation by means of a suitable authentication method, preferably the entire technical module.

## Revendications

1. Procédé d'intégration d'un module technique dans un système d'ingénierie, agissant en plan de commande supérieur hiérarchiquement, d'un système de conduite de processus d'une installation technique, dans lequel le module technique comprend au moins une fonction technique,
**caractérisé en ce que**
on met en mémoire dans le module technique, avant l'intégration dans le plan de commande supérieur hiérarchiquement des droits de fonction concernant la au moins une fonction technique, dans lequel les droits de fonction sont affectés en permanence et dans lequel, avant la mise en mémoire des droits de fonction, on détermine d'abord, dans le cadre d'un contrôle de sécurité en technique de sécurité, l'étendue minimum que les droits de fonction à mettre en mémoire doivent avoir, en fonction de rôle d'utilisateur définis à l'avance dans l'installation technique, dans lequel on fixe une étendue des droits de fonction à mettre en mémoire dans le module technique, à l'aide des résultats du contrôle de sécurité en technique de l'information.

2. Procédé suivant la revendication 1, dans lequel, après la mise en mémoire des droits de fonction dans le module technique, on effectue un contrôle du point de savoir si, après la fixation de l'étendue des droits de fonction, un fonctionnement sans perturbation de l'installation technique est possible.

3. Système technique comprenant un module technique d'une installation technique, qui comprend au moins une fonction technique et qui est constitué pour l'intégration dans un système d'ingénierie d'un système de conduite de processus de l'installation technique,
**caractérisé en ce que**
dans le module technique sont mis en mémoire des droits de fonction concernant la au moins une fonction technique, dans lequel les droits de fonction sont affectés de manière permanente, et dans lequel l'installation technique est propre à déterminer d'abord, avant la mise en mémoire des droits de fonction, dans le cadre d'un contrôle de sécurité en technique de sécurité, l'étendue minimum que doivent avoir, de manière permanente, les droits de fonction à mettre en mémoire en fonction de rôle d'utilisateur définis à l'avance dans l'installation technique, et dans lequel l'installation technique est propre à fixer une étendue des droits de fonction à mettre en mémoire dans le module technique, en fonction des résultats du contrôle de sécurité en technique de l'information.

4. Système technique suivant la revendication 3, qui est propre à caractériser comme digne de confiance au moins les droits de fonction mis en mémoire, au moyen d'un procédé d'authentification approprié par rapport au système d'ingénierie du système de conduite de processus de l'installation technique, de préférence tout le module technique.
